# EUROPEAN PATENT SPECIFICATION

(11) **EP 4 080 658 B1**
(45) Date of publication and mention of the grant of the patent: **11.03.2026**
(21) Application number: 19956819.7
(22) Date of filing: 18.12.2019
(51) Int. Cl.: H01M 50/342, H01M 10/052

(54) **SAFETY APPARATUS AND BATTERY**
SICHERHEITSVORRICHTUNG UND BATTERIE
APPAREIL DE SÉCURITÉ ET BATTERIE

(43) Date of publication of application: 26.10.2022
(73) Proprietor: Eve Energy Co., Ltd., Huizhou, Guangdong 516006 (CN)
(72) Inventor: SHU, Kuanjin, Huizhou, Guangdong 516006 (CN); LI, Kaibo, Huizhou, Guangdong 516006 (CN); ZHU, Pengxiang, Huizhou, Guangdong 516006 (CN); HE, Wei, Huizhou, Guangdong 516006 (CN); ZHU, Yuan, Huizhou, Guangdong 516006 (CN); LV, Zhengzhong, Huizhou, Guangdong 516006 (CN); YUAN, Zhongzhi, Huizhou, Guangdong 516006 (CN); LIU, Jincheng, Huizhou, Guangdong 516006 (CN)
(74) Representative: Cabinet Beaumont
(86) International application number: PCT/CN2019/126224
(87) International publication number: WO 2021/120043

(56) References cited:
- WO-A1-2017/034546
- CN-A- 102 208 582
- CN-A- 110 061 173
- CN-A- 110 061 173
- CN-U- 205 582 984
- CN-U- 208 315 618
- CN-U- 209 561 521
- CN-U- 209 561 521
- CN-Y- 2 827 905
- DE-A1- 102015 007 134
- JP-A- 2019 021 482
- US-A1- 2002 081 482
- US-A1- 2006 292 437
- US-A1- 2007 059 586
- US-A1- 2011 236 734
- US-A1- 2016 043 367
- US-A1- 2018 287 104

## Description

### FIELD

The present disclosure relates to the field of battery manufacturing technologies, and relates to, for example, a security apparatus and a battery.

### BACKGROUND

A lithium battery is usually designed with a security apparatus on a top cover or a housing or both the top cover and the housing thereof. The security apparatus is provided with a circular or oval score-line as a main score-line in conjunction with a line and a rectangular score-line as auxiliary score-lines, thereby forming a pressure relief structure that achieves the release of high-pressure air inside the lithium battery. However, the existing pressure relief structure does not specify or design an opening direction of the security apparatus. During an opening process of the security apparatus, a ruptured valve sheet may cause damage to other nearby components.

D1 (US2007/059586A1) provides a sealed prismatic battery which includes a laterally long cap sealing an opening of an upper surface of a battery can; and a safety vent placed on the cap and having a thin-walled valve body which opens in an abnormal rise of a battery internal pressure, where the safety vent has an oval-shaped circumferential groove formed inside an oval-shaped coining section provided on an outer surface of the cap and on one end side in a lateral direction of the cap and a thin-walled valve body surrounded thereby, and the oval-shaped circumferential groove is composed of lateral side sections parallel to the lateral direction of the cap and circular arc sections connecting these lateral side sections, with one lateral side section, other lateral side section, and the thin-walled valve body of the safety vent respectively having a thickness increased in this order.

D2 (US2016/043367A1) provides a rechargeable battery, including: an electrode assembly for performing charging and discharging operations; a case for accommodating the electrode assembly; and a cap assembly combined to an opening of the case and sealing the case. The case includes a vent at one side, and the vent has a plurality of ends in a thickness direction of the case and includes a plating layer on its surface.

D3 (US2006/292437A1) provides a sealed prismatic battery which includes a laterally elongated cap that closes the upper surface of the opening of a battery can and a safety vent that is provided at the cap and opens when the battery internal pressure abnormally rises, where the safety vent has a looped groove that is formed recessed and located nearer to the left end of the cap on the outer surface side of the cap, the looped groove is annularly formed of front, rear, left and right groove portions into a laterally elongated prismatic shape, and the thickness of the bottom wall of the end side groove portion is thicker than that of the bottom walls of the other groove portions, and the center side groove portion of the looped groove is formed into a circular arc shape curved convex toward the center side of the cap.

D4 (US2018/287104A1) provides a sealing body of a cylindrical battery, including: a metallic disk sealing plate that includes a through-hole and a thin-walled portion, the through-hole being formed at a center of the metallic disk, the thin-walled portion being formed into a groove in a planar surface of the disk, the sealing plate being mounted to a cylindrical battery can having a closed bottom so as to seal an opening of the battery can, the battery can doubling as an electrode current collector of one of a positive or negative electrode and housing a power generating element; an electrode terminal of another of the positive or negative electrode, the electrode terminal including a shaft portion inserted into the through-hole and fitted to the sealing plate; and a sealing gasket made of resin interposed between the shaft portion and the through-hole, the thin-walled portion being not along a concentric circle of an outer periphery of the sealing plate and being formed into an arc shape.

D5 (WO2017/034546A1) provides a lithium-ion battery module including: a housing and a plurality of lithium-ion battery cells disposed in the housing, where each lithium-ion battery cell includes a first terminal with a first polarity, a second terminal with a second polarity opposite to the first polarity, an overcharge protection assembly, and a casing electrically coupled to the first terminal; and a vent of the overcharge protection assembly electrically coupled to the casing and a conductive component of the overcharge protection assembly electrically coupled to the second terminal, where the vent is configured to contact the conductive component to cause a short circuit and to vent a gas from the casing into the housing when a pressure in the casing reaches a threshold value.

D6 (DE 10 2015 007134 A1) relates to a single cell for an electrochemical energy storage device with a cell housing which has a safety valve for reducing excess pressure, and the safety valve has a valve opening closed with a closure element and surrounded by a circumferential groove which has at least two sections with different wall thicknesses.

D7 (US2011/236734A1) provides a safety valve for a battery, and the safety valve includes: an outer annular groove formed of an annular thin wall which is formed on the periphery of the valve element and is provided for releasing the whole valve element; an inner annular groove formed of an annular thin wall which is arranged in an area inside the outer annular groove; and a connecting groove formed of a straight thin wall which connects the outer annular groove and the inner annular groove to each other. A wall thickness of the inner annular groove and a wall thickness of the connecting groove are set larger than a wall thickness of the outer annular groove.

D8 (CN110061173A) provides an anti-explosion valve plate for a battery, and the anti-explosion valve plate includes a valve plate body, wherein a blasting wire, an auxiliary wire and a convex hull structure are arranged on the valve plate body; the blasting wire and the auxiliary wire are arranged at intervals, and the auxiliary wire is formed in a concave form from the outside of the battery towards the inside of the battery; the convex hull structure comprises a first convex hull and a second convex hull which are arranged at intervals; the auxiliary wire is located between the first convex hull and the second convex hull; the second convex hull is arranged between the blasting wire andthe auxiliary wire; and the first convex hull and the second convex hull are arranged at intervals between the blasting wire and the auxiliary wire.

D9 (CN209561521U) provides a battery explosion-proof sheet structure which includes: an explosion-proof sheet, nicks are formed in the surface of the explosion-proof sheet; when the internal air pressure of the battery exceeds a threshold value; wherein the explosion-proof sheet is broken from the nicks, the nicks include a first nick and a second nick, the first nick has no cross point and is arranged on the explosion-proof sheet at a first depth, the second nick is deepened along a part of non-closed line track of the first nick and is arranged on the explosion-proof sheet at a second depth, and the second depth is greater than the first depth.

US2002/081482A1 discloses a closed battery which is capable of rapidly releasing the internal pressure there while simultaneously disconnecting the current to prevent the internal temperature of the battery from rising and causing the battery to explode. Thus, when the internal pressure of the closed battery is elevated due to a short circuit, overcharge, reverse charge, or the like, internal gas in the battery can be safely discharged and the battery prevented from bursting.

### SUMMARY

The present invention is defined by the features of the independent claim. Further embodiments are defined by the dependent claims.

In a first aspect, a security apparatus is provided. A first score-line and a second score-line are disposed on the security apparatus. The first score-line and the second score-line are connected to form a closed line. The first score-line and the second score-line divide the security apparatus into an outer frame and a valve sheet. A thickness of the security apparatus at the second score-line is greater than a thickness of the security apparatus at the first score-line. The valve sheet is capable of being separated from the outer frame along the first score-line and being kept in connection with the outer frame at the second score-line, where the second score-line is a polyline and includes a main score-line and two bending segments, and the two bending segments are each connected to the first score-line at an angle and are each connected to the main score-line at an angle.

In an embodiment, a shape of the closed line is the same as a shape of a profile of the security apparatus.

In an embodiment, the closed line is waist-shaped.

In an embodiment, a third score-line is disposed on the valve sheet, a thickness of the security apparatus at the third score-line is greater than the thickness of the security apparatus at the first score-line, the third score-line is connected to the first score-line, and the third score-line forms a symmetrical pattern with respect to a center of the valve sheet.

In an embodiment, the third score-line includes several sub-score-lines, the several sub-score-lines are each a straight line segment or an arc line, and two ends of each of the several sub-score-lines are both connected to the first score-line.

In an embodiment, the third score-line includes a closed score-line and several score-lines for connection, the closed score-line is located in a middle of the valve sheet and spaced away from an edge of the valve sheet, the several score-lines for connection are radially disposed around the closed score-line, one end of the several score-lines for connection is connected to the closed score-line, and the other end of the several score-lines for connection is connected to the first score-line.

In an embodiment, the valve sheet protrudes toward one side of the outer frame to form a projection structure.

In an embodiment, the projection structure includes a first projection and a second projection spaced apart, an auxiliary score-line is disposed between the first projection and the second projection, the second projection is disposed between the closed line and the auxiliary score-line, and the first projection and the second projection are both spaced from the closed line and the auxiliary score-line.

In an embodiment, the auxiliary score-line and the closed line are matched in shape and structure.

In an embodiment, the closed line and the auxiliary score-line respectively surround a closed region, and the auxiliary score-line is disposed inside the closed region surrounded by the closed line, or the auxiliary score-line is disposed outside the closed region surrounded by the closed line.

In an embodiment, the first projection and the second projection both protrude from an inside of a battery toward an outside of the battery.

In an embodiment, the first projection has a first concave surface and a first convex surface, the second projection has a second concave surface and a second convex surface, the first concave surface and the second concave surface are both located inside the battery, and the first convex surface and the second convex surface are both located outside the battery.

In an embodiment, the first projection is integrally formed; or the first projection is separately formed; or the second projection is integrally formed; or the second projection is separately formed.

In an embodiment, the outer frame has a first inner side surface and a first outer side surface, the valve sheet has a second inner side surface and a second outer side surface, the first inner side surface and the second inner side surface are both located on a side facing an inside of a battery, the first outer side surface and the second outer side surface are both located on a side facing an outside of the battery, a first height difference exists between the first inner side surface and the second inner side surface, and a second height difference exists between the first outer side surface and the second outer side surface.

In a second aspect, a manufacturing method of a security apparatus is provided. The method includes steps described below.

In step S 10, a metal sheet and a die for punching the metal sheet are provided.

In step S20, the die punches the metal sheet from an outside of the metal sheet toward an inside of the metal sheet, and a first projection and a second projection are formed on the metal sheet. In step S30, the die punches the metal sheet, to form an auxiliary score-line, a first rough score-line, and a second rough score-line on an outer side surface of the metal sheet.

In step S40, precision pressing is performed on the first rough score-line and the second rough score-line, and the first rough score-line and the second rough score-line are made into a first score-line and a second score-line respectively.

In a third aspect, a battery is provided, where the battery includes the security apparatus of any one of the preceding technical solutions.

In the security apparatus provided in embodiments of the present application, the first score-line is disposed to form a path for opening the valve sheet, and by providing that the thickness of the security apparatus at the second score-line is greater than the thickness of the security apparatus at the first score-line, it achieves that as an internal air pressure of the battery increases, a pressure causing rupture at the first score-line is reached first, but a pressure causing rupture at the second score-line cannot be reached. Thus, while the valve sheet is opened along the first score-line, the valve sheet is still kept in connection with the outer frame at the second score-line, whereby the valve sheet can be opened orientationally without departing from the outer frame, which would not cause any damage to other components and achieves high safety.

### BRIEF DESCRIPTION OF DRAWINGS

FIG. 1 is a perspective view of a security apparatus according to an embodiment not forming part of the invention as claimed;
FIG. 2 is a top view of the security apparatus shown in FIG. 1;
FIG. 3 is another perspective view of a security apparatus according to an embodiment not forming part of the invention as claimed;
FIG. 4 is a top view of the security apparatus as shown in FIG. 3;
FIG. 5 is another top view of a security apparatus according to an embodiment falling under the claimed invention;
FIG. 6 is another top view of a security apparatus according to an embodiment not forming part of the invention as claimed; and
FIG. 7 is a sectional view taken along A-A of the security apparatus as shown in FIG. 6.

**Reference list**

| | | | |
|---|---|---|---|
| 1 | first score-line | 2 | second score-line |
| 21 | main score-line | 22 | bending segment |
| 3 | third score-line | 31 | sub-score-line |
| 32 | closed score-line | 33 | score-line for connection |
| 4 | auxiliary score-line | 100 | outer frame |
| 101 | first inner side surface | 102 | first outer side surface |
| 200 | valve sheet | 201 | second inner side surface |
| 202 | second outer side surface | 210 | first projection |
| 2101 | first concave surface | 2102 | first convex surface |
| 220 | second projection | 2201 | second concave surface |
| 2202 | second convex surface | | |

### DETAILED DESCRIPTION

Technical solutions in the present disclosure are further described in detail in conjunction with accompany drawings.

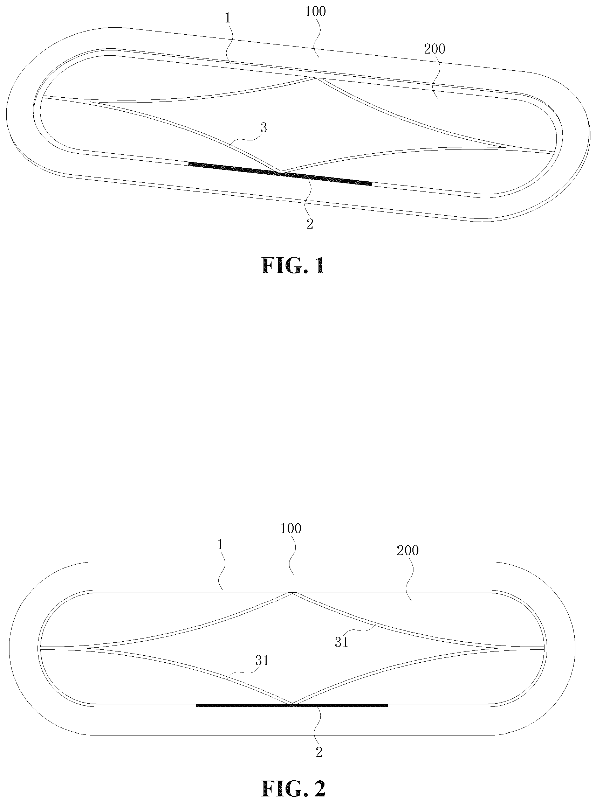

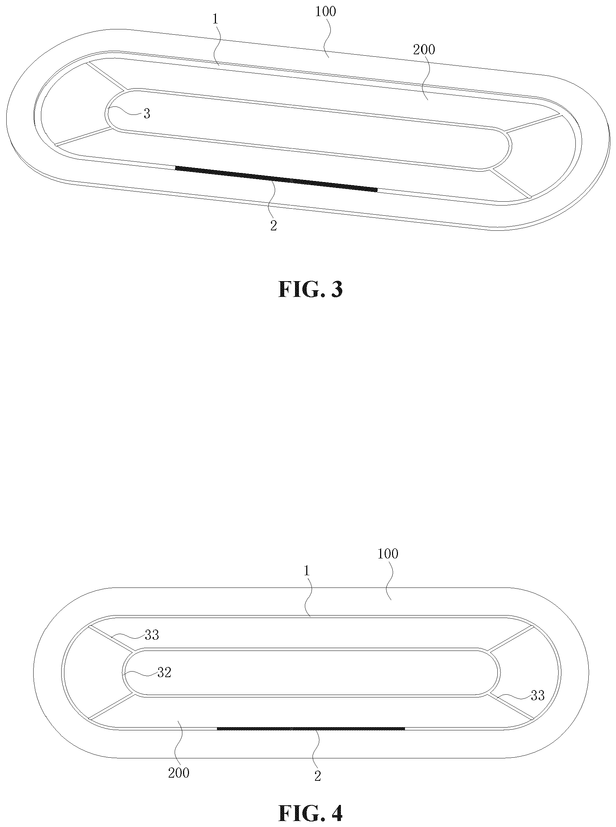

As shown in FIGS. 1 and 3, a first score-line 1 and a second score-line 2 are disposed on a security apparatus in this embodiment. The first score-line 1 and the second score-line 2 are connected to form a closed line. The first score-line 1 and the second score-line 2 divide the security apparatus into an outer frame 100 and a valve sheet 200. A thickness of the security apparatus at the second score-line 2 is greater than a thickness of the security apparatus at the first score-line 1. The valve sheet 200 may be separated from the outer frame 100 along the first score-line 1 and may be kept in connection with the outer frame 100 at the second score-line 2.

In the security apparatus provided in this embodiment, the first score-line 1 is disposed to form a path for opening the valve sheet 200, and by providing that the thickness of the security apparatus at the second score-line 2 is greater than the thickness of the security apparatus at the first score-line 1, it achieves that as an internal air pressure of a battery increases, a pressure causing rupture at the first score-line 1 is reached first, but a pressure causing rupture at the second score-line 2 cannot be reached. Thus, while the valve sheet 200 is opened along the first score-line 1, the valve sheet 200 is still kept in connection with the outer frame 100 at the second score-line, whereby the valve sheet 200 can be opened orientationally without departing from the outer frame 100, which would not cause any damage to other components and achieves high safety.

In an embodiment, a length of the first score-line 1 is greater than a length of the second score-line 2. Since the first score-line 1 and the second score-line 2 are connected to form a closed path, the second score-line 2 is regarded as a part where no rupture occurs, and the length of the second score-line 2 needs to be relatively small, so as to facilitate a safe opening of the valve sheet 200.

In an embodiment, a shape of the closed line is the same as a shape of a profile of the security apparatus so that a limited area of the security apparatus is fully utilized.

As shown in FIGS. 3 and 4, in an embodiment, the closed line is waist-shaped, the second score-line 2 is a straight line segment, and the second score-line 2 is disposed in a middle of a straight side of the closed line. A profile of the security apparatus in this embodiment is waist-shaped, so the closed line is also configured to be waist-shaped, and the second score-line 2 is configured to be linear, which enables the second score-line to be provided with less difficulty.

In other embodiments, the security apparatus is in a shape of a circle, so the closed line is also configured to be in a shape of a circle, and correspondingly, the second score-line 2 is configured to be in a shape of an arc line.

As shown in FIGS. 1 and 3, in an embodiment, a third score-line 3 is disposed on the valve sheet 200, a thickness of the security apparatus at the third score-line 3 is greater than the thickness of the security apparatus at the first score-line 1, the three score-line 3 is connected to the first score-line 1, and the third score-line 3 forms a symmetrical pattern with respect to a center of the valve sheet 200. Since the valve sheet 200 is relatively thin in thickness and low in structural strength, especially in a case where the valve sheet 200 has a relatively large area, when the internal air pressure of the battery is too high and the valve sheet 200 is opened, the valve sheet 200 is prone to be torn and cannot be opened with its entirety. Several third score-lines 3 are disposed and may play a role similar to a reinforcing rib so that the valve sheet 200 is not prone to be partially torn but can be opened with its entirety, thereby better playing the role of pressure relief. The third score-line 3 forms the symmetrical pattern with respect to the center of the valve sheet 200, thereby increasing the structural strength of the valve sheet 200 everywhere. In this manner, the valve sheet 200 is less likely to be partially ruptured when it is opened. The thickness of the security apparatus at the third score-line 3 is greater than the thickness of the security apparatus at the first score-line 1, so that it is ensured that the valve sheet 200 would not be ruptured at the third score-line 3.

As shown in FIG. 2, in an embodiment, the third score-line 3 includes several sub-score-lines 31, each of the sub-score-lines 31 is an arc line, and two ends of each sub-score-line 31 are both connected to the first score-line 1. A shape of the third score-line 3 is simple and is easy to be configured, which can achieve a good effect of increasing an overall strength of the valve sheet 200.

In other implementations, the sub-score-lines 31 are each a straight line.

As shown in FIG. 4, the third score-line includes a closed score-line 32 and several score-lines for connection 33. The closed score-line 32 is located in a middle of the valve sheet 200 and spaced away from an edge of the valve sheet 200. The several score-lines for connection 33 are radially disposed around the closed score-line 32, one end of each of the several score-lines for connection 33 is connected to the closed score-line 32, and the other end of each of the several score-lines for connection 33 is connected to the first score-line 1. The closed score-line 32 effectively improves the strength of the relatively weak middle of the valve sheet 200 and the overall structural strength of the valve sheet 200 is improved by the closed score-line and the radially disposed score-lines for connection 33.

In an embodiment shown in FIG. 4, when the valve sheet 200 is opened along the first score-line 1, although the thickness at the second score-line 2 is relatively large, since the second score-line 2 is linear and two ends of the second score-line 2 are directly connected to the first score-line 1, the impact generated by blasting still causes a certain degree of damage to a position where the second score-line 2 and the first score-line 1 are connected. Therefore, the second score-line 2 needs to be set relatively long, to ensure that the valve sheet 200 is kept in connection with the outer frame 100 after the valve sheet 200 is opened.

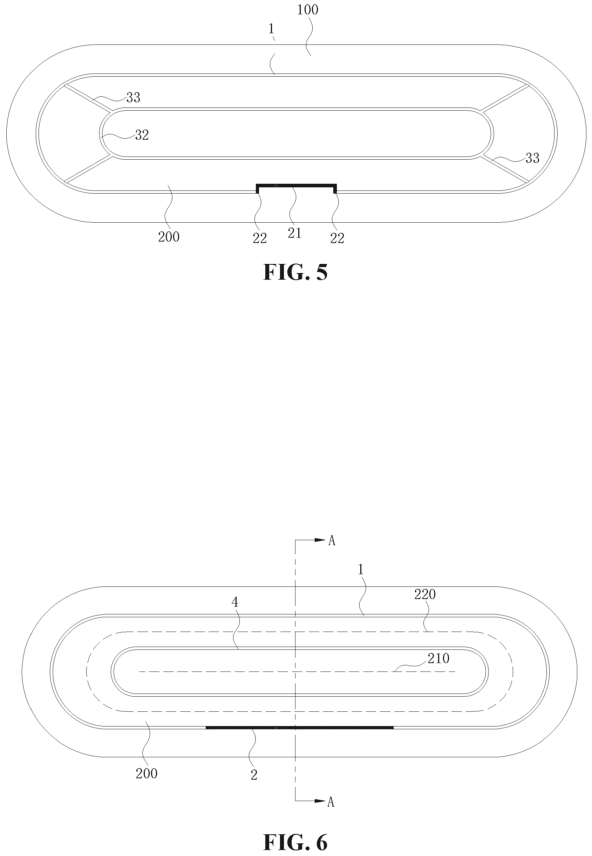

As shown in FIG. 5, in an embodiment, the second score-line 2 is a polyline and includes a main score-line 21 and two bending segments 22, and the bending segments 22 are each connected to the first score-line 1 at an angle and are each connected to the main score-line 21 at an angle. Compared with that the second score-line 2 is a straight line, the second score-line 2 in this embodiment separates the main score-line 21 from the first score-line 1 through the bending segments 22. When the first score-line 1 is ruptured, the bending segments 22 may act as a barrier to prevent the main score-line 21 from becoming a rupture region, thereby ensuring that the valve sheet 200 is kept in connection with the outer frame 100 after the valve sheet 200 is opened.

The bending segments 22 are each vertically connected to the first score-line 1 and are each vertically connected to the main score-line 21.

In an embodiment, the first score-line 1 and the second score-line 2 are both formed by punching, so as to facilitate production and relatively accurately control of the thickness of the security apparatus at the first score-line 1 and the second score-line 2, thereby achieving a normal function of the security apparatus.

The third score-line 3 is also formed by punching.

In an embodiment, the valve sheet 200 protrudes toward one side of the outer frame 100 to form a projection structure. The internal air pressure of the battery may fluctuate within a certain range instead of increases all the time, which makes that the internal air pressure of the battery is constantly changing around an outside air pressure, and causes the valve sheet 200 to move up and down. When the valve sheet 200 is a flat sheet, an excessive number of such movements may cause fatigue cracks or even breakage at the first score-line 1 or the second score-line 2, causing the failure of the security apparatus. The security apparatus with the valve sheet 200 in a form of a projection can provide a certain buffer and can generate a certain degree of deformation to protect weak parts that are more likely to be damaged, preventing the failure of the security apparatus.

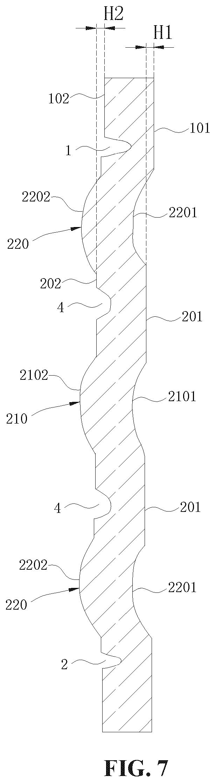

In an embodiment, as shown in FIGS. 6 and 7, the projection structure includes a first projection 210 and a second protrusion 220 spaced apart, an auxiliary score-line 4 is disposed between the first projection 210 and the second projection 220, the second projection 220 is disposed between the closed line formed by the first score-line 1 and the second score-line 2 and the auxiliary score-line 4, and the first projection 210 and the second projection 220 are both spaced from the closed line and the auxiliary score-line 4.

The first score-line 1 and the second score-line 2 are concavely formed from the outside of the battery toward the inside of the battery. In this embodiment, the auxiliary score-line 4 is disposed on the valve sheet 200, and the auxiliary score-line 4 is concavely formed from the outside of the battery toward the inside of the battery. During a punching process, a groove of the auxiliary score-line 4 can disperse part of stress on the valve sheet 200, thereby avoiding the following phenomenon: uneven stress at each position of the first score-line 1 and the second score-line 2 during the punching process, may cause an unflat surface of each of the first score-line 1 and the second score-line 2 at corresponding positions on the security apparatus. According to the preceding designs, a corresponding thickness at each position of the closed line of the security apparatus can be made even, thereby ensuring a same probability of the first score-line 1 being broken by the internal air pressure of the battery at each position, improving the consistency of the opening of the first score-line 1. In addition, in this embodiment, the first projection 210 and the second projection 220 are provided for that: on one hand, during the punching process, the first projection 210 and the second projection 220 may increase a contact area between the security apparatus and a die, which is conducive to the positioning of the security apparatus and the improvement of a punching effect; on the other hand, the structure of the security apparatus is stabilized by the first projection 210 and the second projection 220 so that the possibility of deformation of the security apparatus during the punching process is reduced.

In an embodiment, the auxiliary score-line 4 and the closed line are matched in shape and structure. For example, the closed line is a racetrack structure, and the auxiliary score-line 4 is also a racetrack structure; the closed line is a ring structure, and the auxiliary score-line 4 is also a ring structure; the closed line is a triangular structure, and the auxiliary score-line 4 is also a triangular structure. In this design, each position of the closed line correspond to the auxiliary score-line 4 so that it is ensured that the auxiliary score-line 4 can disperse the stress at each position of the closed line, which is conducive to keeping even thicknesses of the closed line at corresponding positions on the security apparatus.

The closed line and the auxiliary score-line 4 respectively surround a closed region, and the auxiliary score-line 4 may be disposed inside the closed region surrounded by the closed line, or the auxiliary score-line 4 may also be disposed outside the closed region surrounded by the closed line.

In this embodiment, the structures and shapes of the closed line and the auxiliary score-line 4 are both racetrack structures (that is, the closed region formed by the auxiliary score-line 4 and the closed region formed by the closed line are both the racetrack structure). The shapes and structures of the closed line and the auxiliary score-line 4 are all racetrack structures so that the radian of the closed line and the auxiliary score-line 4 changes smoothly, avoiding the occurrence of edges and corners on the closed line and the auxiliary score-line 4, which is conducive to ensuring the consistency of the opening of the first score-line 1 at each position. However, in other embodiments, the structure and shape of the closed line or the auxiliary score-line 4 may also be configured to be an ellipse, a circle, a triangle, a rectangle or other structural shapes. Alternatively, the auxiliary score-line 4 may also be configured to be a linear structure (for example, a curve or a straight line), the linear structure surrounds a non-closed region on the valve sheet 200, and the structure and shape of the auxiliary score-line 4 is not limited herein.

In an embodiment, a groove width of the auxiliary score-line 4 is greater than a groove width of the closed line so as to ensure that the groove of the auxiliary score-line 4 has enough space to disperse the stress at a position corresponding to the closed line of the security apparatus. However, in other embodiments, the groove width of the auxiliary score-line 4 may be configured to be equal to or less than the groove width of the closed line.

In an embodiment, the first projection 210 has a first concave surface 2101 and a first convex surface 2102, the second projection 220 has a second concave surface 2201 and a second convex surface 2202, and the first concave surface 2101 and the second concave surface 2201 are both located inside the battery, and the first convex surface 2102 and the second convex surface 2202 are both located outside the battery so that a first groove and a second groove are respectively formed on a side of the security apparatus closer to the inside of the battery, and the convex surfaces of the projection structure are both disposed outside the battery and do not occupy the internal space of the battery, which is conducive to increasing the capacity of the battery.

In this embodiment, the first projection 210 is disposed at a middle position of the valve sheet 200.

In an embodiment, the first projection 210 is integrally formed; and the second projection 220 is integrally formed.

In another embodiment, the first projection 210 is separately formed. Specifically, the first projection 210 includes multiple first separate projections, and the first separate projections are spaced apart from each other on the valve sheet 200 to form the first projection 210.

In another embodiment, the second projection is separately formed. Specifically, the second projection 220 includes multiple second separate projections, and the second separate projections are spaced apart from each other on the valve sheet 200 to form the second projection 220.

In this embodiment, the outer frame 100 has a first inner side surface 101 and a first outer side surface 102. The valve sheet 200 has a second inner side surface 201 and a second outer side surface 202. The first inner side surface 101, the first outer side surface 102, the second inner side surface 201, and the second outer side surface 202 may be planar or curved. In this embodiment, the first inner side surface 101, the first outer side surface 102, the second inner side surface 201, and the second outer side surface 202 are each a planar structure. The first inner side surface 101 and the second inner side surface 201 are both located on a side facing an inside of a battery. The first outer side surface 102 and the second outer side surface 202 are both located on a side facing an outside of the battery. A first height difference H1 exists between the first inner side surface 101 and the second inner side surface 201. A second height difference H2 exists between the first outer side surface 102 and the second outer side surface 202.

The first height difference H1 is set between the first inner side surface 101 and the second inner side surface 201, and the second height difference H2 is set between the first outer side surface 102 and the second outer side surface 202 so that the outer frame 100 and the valve sheet 200 are located on different planes. In a process of punching the second projection 220 at a position between the closed line and the auxiliary score-line 4, the first height difference H1 and the second height difference H2 may be used for dispersing part of the stress on the security apparatus, thereby reducing the possibility of deformation of the outer frame 100 and the valve sheet 200.

In an embodiment, a thickness of the outer frame 100 is equal to a thickness of the valve sheet 200, and the first height difference H1 is equal to the second height difference H2. Preferably, the first height difference H1 and the second height difference H2 are both 0.5 mm. The thickness of the outer frame 100 is equal to the thickness of the valve sheet 200 so that it is convenient to place the die and perform punching.

The present embodiment further provides a manufacturing method of a security apparatus, and the method is used for manufacturing security apparatuses of some of the preceding embodiments and includes steps described below.

In step S10, a metal sheet and a die for punching the metal sheet are provided. In this embodiment, at least three dies are included, and the three dies are respectively used for punching a projection structure, performing rough pressing on a closed line, and performing precision pressing on a closed line.

In step S20, the die punches the metal sheet from an outside of the metal sheet toward an inside of the metal sheet, and a first projection 210 and a second projection 220 are formed on the metal sheet.

In step S30, the die punches the metal sheet, to form an auxiliary score-line 4, a first rough score-line, and a second rough score-line on an outer side surface of the metal sheet.

In this embodiment, the first projection 210 and the second projection 220 are synchronously formed by punching on the metal sheet by a same die, thereby saving the usage of the die and improving a punching efficiency of the metal sheet. However, in other embodiments, the first projection 210 and the second projection 220 may be formed by punching by two dies, respectively. In this embodiment, the metal sheet is punched first to form projection structures (the first projection 210 and the second projection 220), and the structure of the metal sheet is stabilized by the projection structures, thereby reducing the possibility of deformation of the metal sheet when the first rough score-line, the second rough score-line, and the auxiliary score-line 4 are punched and making preparations for the subsequent punching of a first score-line 1 and a second score-line 2. In addition, in a process of punching the auxiliary score-line 4, the first rough score-line, and the second rough score-line, a contact area between the die and the metal sheet is increased by the projection structures, which is conducive to the positioning of the die, thereby facilitating punching.

In step S40, precision performing is performed on the first rough score-line and the second rough score-line, and the first rough score-line and the second rough score-line are made into a first score-line 1 and a second score-line 2 respectively.

Rough pressing is performed on the metal sheet to form the first rough score-line, the second rough score-line, and the auxiliary score-line 4, and then the first rough score-line and the second rough score-line are precision pressed to form the first score-line 1 and the second score-line 2. The groove of the auxiliary score-line 4 may disperse the stress at positions corresponding to the first rough score-line and the second rough score-line on the metal sheet, thereby avoiding the phenomenon of unevenness occurring at positions corresponding to the first score-line 1 and the second score-line 2 on the metal sheet and ensuring that thicknesses at the positions corresponding to the first score-line 1 and the second score-line 2 on the metal sheet are even. The first score-line 1 and the second score-line 2 are punched twice, rough pressing is performed on the metal sheet first to form the first rough score-line and the second rough score-line on the metal sheet, the first score-line 1 and the second score-line 2 are positioned through the first rough score-line and the second rough score-line, and the first rough score-line and the second rough score-line are deepened through precision pressing to form the first score-line and the second score-line 2. Moreover, during this process, the groove of the auxiliary score-line 4 disperses the stress at the positions corresponding to the first rough score-line and the second rough score-line on the metal sheet during the punching process. Since the first score-line 1 and the second score-line 2 on the metal sheet are punched twice, the first score-line 1 and the second score-line 2 are gradually deepened, thereby further reducing the possibility of deformation of the metal sheet.

In this embodiment, a depth of the first rough score-line and a depth of the second rough score-line are equal to a depth of the auxiliary score-line 4 (that is, corresponding thicknesses of the first rough score-line and the second rough score-line on the metal sheet are equal to a thickness of the auxiliary score-line 4 on the metal sheet), and a depth of the first score-line 1 is greater than the depth of the auxiliary score-line 4.

In an embodiment, after step S40, step S50 is further included in which the metal sheet is annealed and formed, so as to eliminate the residual stress on the metal sheet during the punching process and reduce the possibility of shape change and deformation of the security apparatus.

This embodiment further provides a battery, and the battery includes the security apparatus of any of the preceding embodiments. Since the battery has the security apparatus that can be opened orientationally, the battery has relatively high safety performance.

It is to be noted that the security apparatus in the present disclosure may be applied to button batteries, prismatic batteries, cylindrical batteries, and other special-shaped batteries, and types of batteries to which the security apparatus can be applied are not limited here.

In this embodiment, a prismatic battery is used as an example to describe a manufacturing method of a battery in detail, including steps described below.

In step a, a top cover, a jellyroll, a housing, and the security apparatus of any of the preceding embodiments are provided.

In step b, the security apparatus is welded to the top cover by laser welding so as to assemble the security apparatus and the top cover.

In step c, the jellyroll, the housing, and the top cover are assembled to form a semi-finished battery.

In step d, an electrolyte is injected into the semi-finished battery, and formation charging is performed to form a battery.

## Claims

1. A security apparatus for a battery, comprising a first score-line (1) and a second score-line (2) that are disposed on the security apparatus, wherein the first score-line (1) and the second score-line (2) are connected to form a closed line, the first score-line (1) and the second score-line (2) divide the security apparatus into an outer frame (100) and a valve sheet, a thickness of the security apparatus at the second score-line (2) is greater than a thickness of the security apparatus at the first score-line (1), and the valve sheet is capable of being separated from the outer frame (100) along the first score-line (1) and being kept in connection with the outer frame (100) at the second score-line (2); **characterized in that** the second score-line (2) is a polyline and comprises a main score-line (21) and two bending segments (22), and the two bending segments (22) are each connected to the first score-line (1) at an angle and are each connected to the main score-line (21) at an angle.

2. The security apparatus of claim 1, wherein a third score-line (3) is disposed on the valve sheet, a thickness of the security apparatus at the third score-line (3) is greater than the thickness of the security apparatus at the first score-line (1), the third score-line (3) is connected to the first score-line (1), and the third score-line (3) forms a symmetrical pattern with respect to a center of the valve sheet.

3. The security apparatus of claim 2, wherein the third score-line (3) comprises a closed score-line (32) and score-lines for connection (33), the closed score-line (32) is located in a middle of the valve sheet and spaced away from an edge of the valve sheet, the score-lines for connection (33) are radially disposed around the closed score-line (32), one end of each of the score-lines for connection (33) is connected to the closed score-line (32), and the other end of each of the score-lines for connection (33) is connected to the first score-line (1).

4. The security apparatus of claim 1, wherein the valve sheet protrudes toward one side of the outer frame (100) to form a projection structure.

5. A battery, comprising the security apparatus of any one of claims 1 to 4.

## Patentansprüche

1. Sicherheitsvorrichtung für eine Batterie, umfassend eine erste Kerblinie (1) und eine zweite Kerblinie (2), die an der Sicherheitsvorrichtung angeordnet sind, wobei die erste Kerblinie (1) und die zweite Kerblinie (2) verbunden sind, um eine geschlossene Linie zu bilden, wobei die erste Kerblinie (1) und die zweite Kerblinie (2) die Sicherheitsvorrichtung in einen Außenrahmen (100) und ein Ventilblatt unterteilen, wobei eine Dicke der Sicherheitsvorrichtung an der zweiten Kerblinie (2) größer ist als eine Dicke der Sicherheitsvorrichtung an der ersten Kerblinie (1), und wobei das Ventilblatt entlang der ersten Kerblinie (1) vom Außenrahmen (100) getrennt und an der zweiten Kerblinie (2) mit dem Außenrahmen (100) verbunden gehalten werden kann;
**dadurch gekennzeichnet, dass**
die zweite Kerblinie (2) eine Polylinie ist und eine Hauptkerblinie (21) und zwei Biegesegmente (22) umfasst, wobei die beiden Biegesegmente (22) jeweils in einem Winkel mit der ersten Kerblinie (1) und jeweils in einem Winkel mit der Hauptkerblinie (21) verbunden sind.

2. Sicherheitsvorrichtung nach Anspruch 1, wobei an dem Ventilblatt eine dritte Kerblinie (3) angeordnet ist, wobei eine Dicke der Sicherheitsvorrichtung an der dritten Kerblinie (3) größer ist als die Dicke der Sicherheitsvorrichtung an der ersten Kerblinie (1), wobei die dritte Kerblinie (3) mit der ersten Kerblinie (1) verbunden ist, und wobei die dritte Kerblinie (3) ein symmetrisches Muster in Bezug auf die Mitte des Ventilblatts bildet.

3. Sicherheitsvorrichtung nach Anspruch 2, wobei die dritte Kerblinie (3) eine geschlossene Kerblinie (32) und Verbindungskerblinien (33) umfasst, wobei die geschlossene Kerblinie (32) sich in der Mitte des Ventilblatts befindet und von einer Kante des Ventilblatts beabstandet ist, während die Verbindungskerblinien (33) radial um die geschlossene Kerblinie (32) angeordnet sind, wobei ein Ende jeder der Verbindungskerblinien (33) mit der geschlossenen Kerblinie (32) und das andere Ende jeder der Verbindungskerblinien (33) mit der ersten Kerblinie (1) verbunden ist.

4. Sicherheitsvorrichtung nach Anspruch 1, wobei das Ventilblatt zu einer Seite des Außenrahmens (100) hin vorsteht, um eine Vorsprungsstruktur zu bilden.

5. Batterie, umfassend die Sicherheitsvorrichtung nach einem der Ansprüche 1 bis 4.

## Revendications

1. Appareil de sécurité pour une batterie, comprenant une première ligne de score (1) et une deuxième ligne de score (2) qui sont disposées sur l'appareil de sécurité, dans lequel la première ligne de score (1) et la deuxième ligne de score (2) sont reliées pour former une ligne fermée, la première ligne de score (1) et la deuxième ligne de score (2) divisent l'appareil de sécurité en un cadre extérieur (100) et une feuille de valve, une épaisseur de l'appareil de sécurité à la deuxième ligne de score (2) est supérieure à une épaisseur de l'appareil de sécurité à la première ligne de score (1), et la feuille de valve est capable d'être séparée à partir du cadre extérieur (100) le long de la première ligne de score (1) et d'être gardée en connexion avec le cadre extérieur (100) à la deuxième ligne de score (2) ;
**caractérisé en ce que**
la deuxième ligne de score (2) est une polyligne et comprend une ligne de score principale (21) et deux segments de cintrage (22), et les deux segments de cintrage (22) sont tous reliés à la première ligne de score (1)à un angle et sont tous reliés à la ligne de score principale (21) à un angle.

2. Appareil de sécurité selon la revendication 1, dans lequel une troisième ligne de score (3) est disposée sur la feuille de valve, une épaisseur de l'appareil de sécurité à la troisième ligne de score (3) est supérieure à l'épaisseur de l'appareil de sécurité à la première ligne de score (1), la troisième ligne de score (3) est reliée à la première ligne de score (1), et la troisième ligne de score (3) forme un motif symétrique par rapport à un centre de la feuille de valve.

3. Appareil de sécurité selon la revendication 2, dans lequel la troisième ligne de score (3) comprend une ligne de score fermée (32) et des lignes de score pour une connexion (33), la ligne de score fermée (32) est située à un milieu de la feuille de valve et espacée d'un bord de la feuille de valve, les lignes de score pour une connexion (33) sont disposées radicalement autour de la ligne de score fermée (32), une extrémité de chacune des lignes de score pour une connexion (33) est reliée à la ligne de score fermée (32), et l'autre extrémité de chacune des lignes de score pour une connexion (33) est reliée à la première ligne de score (1).

4. Appareil de sécurité selon la revendication 1, dans lequel la feuille de valve fait saillie vers un côté du cadre extérieur (100) pour former une structure de projection.

5. Batterie, comprenant l'appareil de sécurité selon l'une quelconque des revendications 1 à 4.
